# EUROPEAN PATENT SPECIFICATION

(11) **EP 1 333 893 B1**
(45) Date of publication and mention of the grant of the patent: **27.09.2006**
(21) Application number: 01996416.2
(22) Date of filing: 16.11.2001
(51) Int. Cl.: A63B 71/00

(54) **A METHOD OF DETERMINING PRESSURE INDEX**
VERFAHREN ZUM BESTIMMEN EINES DRUCKINDEXES
PROCEDE SERVANT A DETERMINER UN INDICE DE PRESSION

(30) Priority: 16.11.2000 DK 200001716
(43) Date of publication of application: 13.08.2003
(73) Proprietor: JM Konsulentfirma, 5230 Odense M (DK)
(72) Inventor: MELVANG, Jens, FR-06100 Nice (FR)
(74) Representative: Boesen, Johnny Peder
(86) International application number: PCT/DK2001/000766
(87) International publication number: WO 2002/040113

## Description

The invention relates to a method of determining pressure on a player in control of a game tool in a game by using a computer. The game takes place in a sports field and the sports field is provided with at least one goal. The game also comprises at least two teams and at least one game tool. Each team consists of at least one player. The invention further relates to an apparatus for determining pressure on a player in control of a game tool in a game.

The intensity of a game expresses the magnitude of the pressure exerted on the participants of the game. The larger the pressure exerted on a participant, the more difficult it is for the individual player to exercise the game. By determining the pressure it is therefore possible to tell at which level a game is being exercised.

Today, the intensity of a game is measured by experts in the form of former or present players, coaches or other with comprehensive knowledge of the game in question performing an assessment after having watched the game. This assessment is based on subjective considerations that are influenced by the relevant expert's technical background with the game and takes its starting point in an overall hunch of the course of the game. A subjective assessment is therefore not always in accordance with the factual intensity.

This subjective assessment renders comparisons of the intensity of a game over time or across national leagues untrustworthy. A more objective method would render such comparisons trustworthy. The subjective assessment makes the foundation of the analysis unreliable and the understanding of the game and the possibilities of developing the game become uncertain. An objective determination of the intensity strengthens the foundation of the analysis and thus enhances the understanding of the game and its possibilities of development.

FR patent application No. 2711069 teaches a method for detecting offside situations in football that involves detection of the position of each player (1 through 11 and 21 through 31) on the sports field, whereby a triggering signal is emitted when an offside situation occurs, the position of the forwardmost player of the attacking team is compared to the positions of the two rear-wardmost players of the defending team, and a signal is generated in the event of a positive comparison when the triggering signal is emitted.

However, the method is restricted to detecting offside situations and is not capable of calculating a measure of the pressure index on the players.

FR patent application No. 2726370 teaches a position determination system having a tracking system that includes very small radio emitters placed in the ball and on each player and at least three receivers to determine each position in 3-D. The emitters' range determines the number of receivers required to cover the whole sports field. Alternatively one or more cameras with digital image control can determine the positions. Information is conveyed to a processor that analyses it and stores the result, eg for providing statistics, match state and tactic. The information can also be used later on for training purposes. The system also informs a referee in real time about any controversial situation, by visual or sound channels.

However FR 2726370 does not define how the statistic results are determined and, likewise, it is not defined either how the tactics are determined. Albeit it has been taken into account at which point in time the measurements occur, it is not very specific, however, and absolutely not when it comes to tactics. It has not been taken into account, among which players the measurements are taken, or between which players the distance is to be determined. Besides, the system is not able to incorporate the speed of the players in the calculations, either. Finally, choice of calculation method is not specified.

FR patent application No. 2753633 teaches a method that involves continually and remotely monitoring the positions of the players and the ball to the nearest centimetre by use of a refresh rate of less than 10ms. The position signals are transmitted to a computer and to the referee and are used to determine the positions of the players from both teams and the ball in real time. This information allows the referee to make appropriate decisions, eg when a corner kick should be awarded. Position finding is performed by use of a radio position finder or a high resolution and high definition, very short carrier radar.

However, the method is limited to the detection of offside situations and is not capable of calculating a measure for the pressure index on the players.

International patent application No. WO 98/37932 discloses a radio frequency positioning system that determines identity and positional data of numerous objects. The system includes a plurality of spread spectrum radio transceivers where at least one transceiver is positioned on each of the numerous objects. At least three radio transceivers transmit to and receive signals from the radio transceivers. A signal processor is coupled to the radio transceivers and determines the identity and the positional data of the objects.

However, the system merely focuses on the tracking of objects, and a method of calculating a measure for the pressure index on the players is not included.

FR 2732797 discloses an image sequence analysis and modelling system for reconstructing game sequences in animated sequences. A method of calculating a measure for the pressure index on players is not included.

WO-A-00/44449 discloses a system for facilitating visual analyses of individual players based on video sequences. A method of calculating a measure for the pressure index on players is not included.

FR 2758429 discloses a method of generating video sequences of a sport by including virtual real time elements. A method of calculating a measure for the pressure index on players is not included.

FR 2710434 discloses real time acquisition and processing of data concerning positions and/or performance of players. A method of calculating a measure for the pressure index on Players is not included.

US 5513854 discloses a system, used to acquire and process in real time data pertaining to the position and/or physical performances of one or several persons in motion on a field, in particular athletes in motion on a game field. A method of calculating a measure for the pressure index on players is not included

It is the object of the invention to provide a method of obtaining a pressure index for determining the intensity of eg,a football game across sports fields of different dimensions.

This object is achieved according to the invention by the method as defined in claim 1 and by the apparatus as defined in claim 18.

In this method and in this apparatus a computer is performing the steps of:
- receiving information about the positions of said players and said game tool, said positions having been determined by positioning means,
- determining a pressure index being a value representing the pressure on said player in control of said game tool, said pressure index being determined based on said received information about the positions of said players and said game tool,
wherein said pressure index is determined as the sum of pressure on said player from at least one opponent player (M1), the pressure being based on at least one function of both distance between said one opponent player (M1) and the player (X₁) and the time that lapses from the player (X₁) receives the game tool until the player (X₁) is not longer in possession of the game tool.

Particular embodiments of the invention are the subject of the dependent claims.

Hereby it is possible to obtain a quantifiable and unambiguous measurement of the pressure index on a player by a method that is independent of a human discretion from an expert, ie an objective and reproducible method.

The pressure exerted by each opponent can be determined by a computer calculation wherein the function of distance and time constitutes the speed of an opponent.

Hereby the pressure can also be determined on the basis of the speed of the opponents.

The pressure from each opponent can be determined by a computer calculation, wherein a function of distance and time constitutes the acceleration of an opponent.

Hereby the pressure can also be determined on the basis of the acceleration of the opponents.

The pressure from each opponent can be based on at least the distance between an opponent and the game tool.

In this manner the pressure can be determined in relation to the game tool.

The pressure from each opponent can be based on the time lapsed from the point when the game tool is transmitted in the direction of the player until the player is in possession of the game tool when determining the pressure index.

Hereby it is possible to determine a pressure index containing the previous pressure.

The pressure from an opponent can be determined as an average of the difference between the actual distance to the opponent and the ideal distance of the opponent relative to the player during the time that lapses from the game tool is transmitted in the direction of the player until the player comes into possession of the game tool plus the difference between the actual distance of the opponent and the ideal distance of the opponent relative to the game tool during the time that lapses from the player comes into possession of the game tool until the player is no longer in possession of the game tool, and wherein the average is weighted by a constant, where the constant is an expression of the pressure significance of an opponent.

Hereby it is made possible to determine the pressure index based on the distance alone.

The pressure from an opponent can be based on an average of the speed of the opponent in the direction of the player during the time that lapses from the game tool is transmitted in the direction of the player until the player comes into possession of the game tool, plus the speed of the opponent in the direction of the game tool during the time that lapses from the player comes into possession of the game tool until the player is no longer in possession of the game tool, and wherein the average is weighted by a constant, whereby the constant is an expression of the pressure significance of an opponent.

Hereby it is possible to determine the pressure index based on the speed alone.

The pressure from an opponent can be determined as an average of the reciprocal value of the difference between the actual distance of the opponent and the ideal distance of the opponent relative to the player during the time that lapses from the game tool is transmitted in the direction of the player until the player comes into possession of the game tool, plus the reciprocal value of the difference between the actual distance of the opponent and the ideal distance of the opponent relative to the game tool during the time that lapses from the player comes into possession of the game tool until the player is no longer in possession of the game tool, and wherein the average is weighted by a constant, where the constant is an is weighted by a constant, where the constant is an expression of the pressure significance of an opponent.

Hereby it is made possible to determine the pressure index for each individual opponent, wherein the opponent's significance to the pressure is implicitly weighted in the distance between the actual position and the ideal position of the opponent.

The pressure from an opponent can be based on an average of the speed of the opponent in the direction of the player divided by the difference between the actual distance of the opponent and the ideal distance of the opponent relative to the player during the time that lapses from the game tool is transmitted in the direction of the player until the player comes into possession of the game tool, plus the speed of the opponent in the direction of the game tool divided by the difference between the actual distance of the opponent and the ideal distance of the opponent relative to the game tool during the time that lapses from the player comes into possession of the game tool until the player is no longer in possession of the game tool, and wherein the average is weighted by a constant, where the constant is an expression of the pressure significance of an opponent.

Hereby it is possible to determine the pressure index for each individual opponent, where the significance of the opponent to the pressure is implicitly weighted in the distance between the actual position of the opponent and the ideal position and simultaneously the significance of the speed is included.

The pressure from a rearmost opponent, who is different from the goalkeeper, can be based on an average of the speed of the rearmost opponent divided by the difference between the component for the actual distance of the rearmost opponent to the game tool in the longitudinal direction of the sports field and the component for the ideal distance of the rearmost opponent relative to the game tool in the longitudinal direction of the sports field during the time that lapses from the game tool is transmitted to the player until the player is no longer in possession of the game tool, and wherein the average is weighted by a constant, where the constant is an expression of the pressure significance of the rearmost opponent.

Hereby it is possible to determine the pressure index for the area on the sports field that is available to the team featuring the player in control of the game tool, since participants of the team featuring the player in control of the game tool is eg in an offside position in the area behind the rearmost opponent.

The pressure from a rearmost opponent who is different from the goalkeeper can be based on an average of the speed of the rearmost opponent divided by the difference between the actual distance of the rearmost opponent in the longitudinal direction of the sports field to the goal line and the maximal pressure distance of the rearmost opponent during the time that lapses from the game tool is transmitted to the player until the player is no longer in possession of the game tool, and wherein the average is weighted by a constant, where the constant is an expression of the pressure significance of the rearmost opponent.

Hereby it is possible to determine the pressure index for that area of the sports field that is available to the team featuring the player in control of the game tool, and to implicitly weight the significance of the rearmost opponent by the maximal pressure distance of the rearmost opponent.

The sum of pressure from at least one opponent and maximally an entire team of opponents can be corrected for the size of a sports field by means of a correction factor, where the correction factor constitutes the sum of 1 and a fraction having a numerator that is the maximal area of a sports field minus the product of the actual width of a sports field and the actual length of a sports field, and the fraction has a denominator that is the maximal area of the sports field, where the maximal area of the sports field is the maximal length of a sports field multiplied by the maximal width of a sports field.

Hereby an increment correction of the pressure index for the size of the sports field is enabled, which is crucial if a pressure index is to be compared across sports fields of different sizes.

The sum of pressure from at least one opponent and maximally an entire team of opponents can be corrected for the size of a sports field by means of a correction factor, where the correction factor constitutes the difference between 1 and a fraction having a numerator that is the maximal area of a sports field minus the product of the actual width of a sports field and the actual length of a sports field, and the fraction has a denominator that is the maximal area of the sports filed, where the maximal area of the sports field is the maximal length of a sports field multiplied by the maximal width of a sports field.

Hereby a decrement correction of the pressure index for the size of the sports field is enabled, provided the pressure index is determined according to standard, which is important if a pressure index is to be compared across sports fields of different sizes.

The pressure index on a player in possession of the game tool can be determined as the average of the pressure from at least one of the opponents and maximally an entire team of opponents multiplied by a correction factor for the size of the sports field.

Hereby it is possible to determine a pressure index for the average pressure on a player.

A total pressure index can be calculated by computer by an average of continuous measurements of a pressure index on any player in possession of the game tool.

Hereby it is possible to obtain information on a total average pressure index over a protracted period of time.

A total pressure index can be determined as the sum of continuous measurements of a pressure index on any player in possession of the game tool.

Hereby it is possible to obtain information about a total summated pressure index over a protracted period of time.

The number of goals can be two and the number of game tools can be one and the number of teams can be two and each team can typically consist of eleven players and the rearmost opponent is different from a goalkeeper.

Hereby delimitations are obtained for the method of determining pressure index that make the method useful for sports such as eg football.

The method of determining pressure index can be used eg for one of the sports: football, handball, basketball, ice hockey, and American football.

Hereby a reliable method is obtained of determining pressure index and which is independent of a human discretion by an expert, i.e. an objective and reproducible method for the sports: football, handball, basketball, ice hockey, and American football.

Collection of data for determining the position of the individual player and the position of the individual opponent and the position of game tools can be determined e.g. by means of video monitoring equipment.

Hereby a reliable position determination is obtained by means of existing monitoring equipment on e.g. large-scale football stadiums.

Collection of data for determining the position of the individual player and the position of the individual opponent and the position of game tools can be determined e.g. by means of transmitters mounted on the individual player and transmitters mounted on the individual opponent and transmitters mounted on the game tools and at least one signal receiver located around the sports field.

Hereby reliable position determination is obtained by means of monitoring equipment that is capable of determining the position automatically, thereby rendering manual position determination redundant.

Collection of data for determining the position of the individual player and the position of the individual opponent and the position of game tools can be determined e.g. visually by monitoring performed by an expert.

Hereby it is made possible to use the method of determining pressure index on e.g. football fields that do not have monitoring equipment or signal transmitters at their disposal.

The invention will now be described in further detail with reference to the accompanying figures, wherein
Figure 1 shows a pressure situation in which the pressure index on a player is calculated on the basis of the most proximate opponent; and
Figure 2 shows a pressure situation in which the game tool is being transmitted in the direction of the player, where the pressure index on a player is calculated on the basis of the three most proximate opponents and a rearmost opponent, and where the sports field is equipped with video monitoring equipment; and
Figure 3 shows a pressure situation in which the pressure index on a player in possession of the game tool is calculated on the basis of the three most proximate opponents and a rearmost opponent;
Figure 4 is an expression of the pressure from an opponent based on the distance between opponent and player; and
Figure 5 is an expression of the pressure from an opponent based on the speed of the opponent; and
Figure 6 is an expression of the pressure from an opponent based on the distance including the time that lapses from the game tool is transmitted in the direction of the player until the player ends his contact with the game tool; and
Figure 7 is an expression of the pressure from an opponent based on the speed including the time that lapses from the game tool is transmitted in the direction of the player until the player ends his contact with the game tool; and
Figure 8 is a standardized expression of the pressure from an opponent based on the distance including the time that lapses from the game tool is transmitted in the direction of the player until the player ends his contact with the game tool; and
Figure 9 is an expression of the pressure from an opponent based on the distance and speed including the time that lapses from the game tool is transmitted in the direction of the layer until the player ends his contact with the game tool; and
Figure 10 is an expression of the pressure from a rearmost opponent; and
Figure 11 is an expression of the ideal distance between the rearmost opponent and the game tool; and
Figure 12 is a second expression of the pressure from a rearmost opponent; and
Figure 13 is an expression of an increment correction factor for the actual area of the sports field; and
Figure 14 is an expression of a decrement correction factor for the actual area of the sports field; and
Figure 15 is an expression of the pressure on a player based on the distance, where the pressure index is calculated on the basis of an opponent, corrected by an increment correction factor for the size of the sports field; and
Figure 16 is an expression of the pressure on a player based on the speed, wherein the pressure index is calculated on the basis of the two most proximate opponents, and wherein the pressure index is corrected by a decrement correction factor for the size of the sports field; and
Figure 17 is a standardized expression of the pressure on a player based on the distance, where the pressure index is calculated on the basis of the most proximate two opponents and a rearmost opponent, and wherein the pressure index is corrected by a decrement correction factor for the size of the sports field; and
Figure 18 is an expression of the pressure on a player based on the distance and speed, where the pressure index is calculated on the basis of the three most proximate opponents and a rearmost opponent, and wherein the pressure index is corrected by a decrement correction factor for the size of the sports field; and
Figure 19 is an expression of the pressure on a player based on the distance and speed, where the pressure index is calculated on the basis of the average of the pressure from the three most proximate opponents and a rearmost opponent, and wherein the pressure index is corrected by a decrement correction factor for the size of the sports field.

In the following examples will be given on how the pressure on a player in a game can be determined using a computer and especially it will be described how the computer based on the received positions of the players can determine a pressure index by using its processing means for performing calculations.

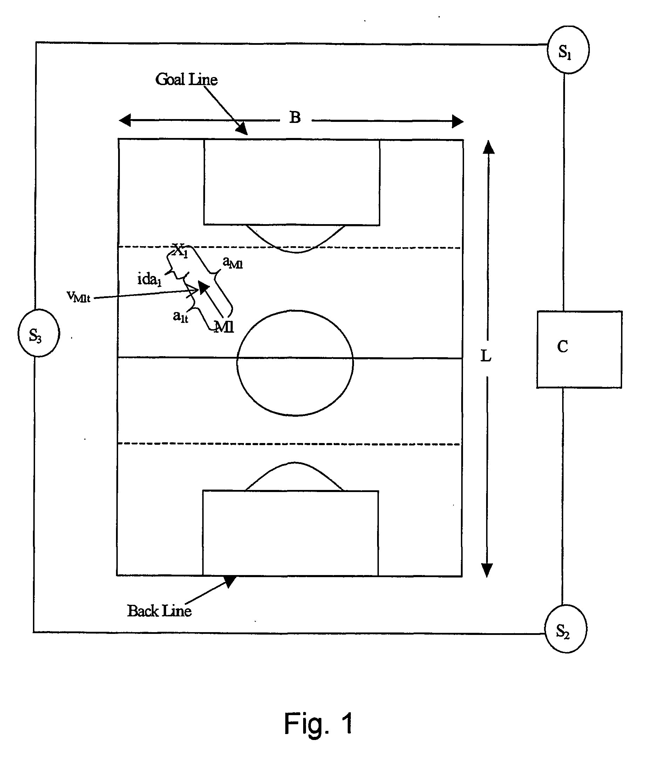

In Figure 1 a player (X₁) is shown on a sports field having the width B and the length L. A goal line is located at the top of the figure, whereas a back line is located at the bottom. The pressure index is calculated on the basis of the most proximate opponents (M1). a₁ is the distance between the actual position of the opponent (M1) and the ideal position of the opponent (M1) that is expressed by the difference between the distance a_{M1} of the opponent (M1) to the player X₁, and the ideal distance ida₁ of the opponent (M1) to the player X₁. S₁ S₂ S₃ are signal receivers and C is a computer.

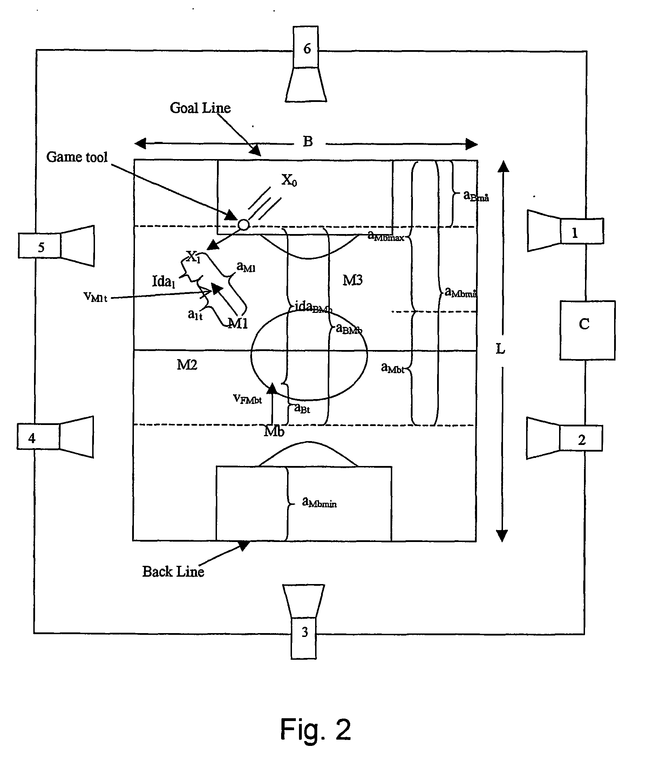

Figure 2 depicts a point in time when the player (X₀) transmits the game tool to a player (X₁) on a sports field having the width B and the length L. A goal line is located at the top of the figure, whereas a back line is located at the bottom. The pressure index is calculated on the basis of the three most proximate opponents (M1, M2, M3) and a rearmost opponent (Mb). a₁ is the distance between the actual position of the opponent (M1) and the ideal position of the opponent (M1) that is expressed by the difference between the distance a_{M1} of the opponent (M1) to the player X₁ and the ideal distance ida₁ of the opponent (M1) to the player X₁. a_{B} is a component in the longitudinal direction of the sports field of the distance between the actual position of the rearmost opponent (Mb) and the ideal position of the rearmost opponent (Mb) that is expressed by the difference between the distance component (a_{BMb}) of the rearmost opponent to the game tool in the longitudinal direction and the ideal-distance component (ida_{BMb}) of the rearmost opponent (Mb) in the longitudinal direction. a_{Mb} is the distance between the maximal pressure position of the rearmost opponent (Mb) and the actual position of the rearmost opponent expressed by the difference between the distance between the maximal pressure position of the rearmost opponent and the goal line a_{Mbmax} and the distance between the actual position of the rearmost opponent (Mb) and the goal line a_{Mbmå}. a_{Bmå} is the distance in the longitudinal direction between the game tool and the goal line. Six monitoring cameras 1,2,3,4,5,6 can be seen around the sports field as well as a computer C.

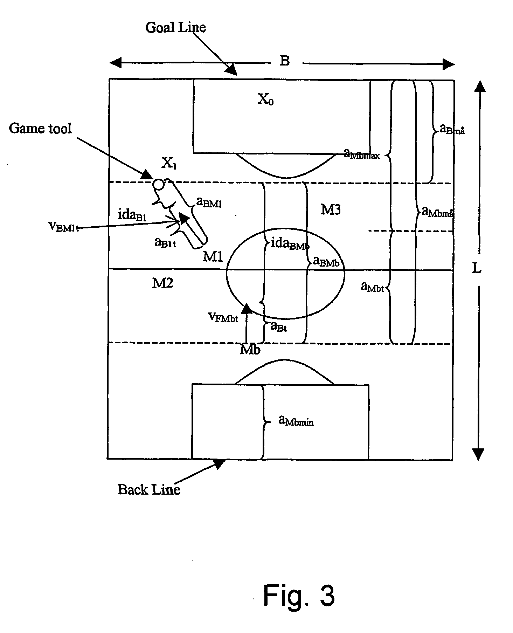

Figure 3 depicts a point in time when the player X₁ is in possession of the game tool. A goal line is located at the top of the figure, whereas a back line is located at the bottom. The pressure index is calculated on the basis of the three most proximate opponents (M1, M2, M3) and a rearmost opponent (Mb). a_{B1} is the distance between the actual position of the opponent (M1) and the ideal position of the opponent (M1) that is expressed by the difference between the distance a_{BM1} of the opponent (M1) to the game tool, and the ideal distance ida_{B1} of the opponent (M1) to the game tool. a_{B} is the component in the longitudinal direction of the sports field of the distance between the actual position of the rearmost opponent (Mb) and the ideal position of the rearmost opponent (Mb) that is expressed by the difference between the distance component (a_{BMb}) of the rearmost opponent (Mb) to the game tool in the longitudinal direction, and the ideal-distance component (ida_{BMb}) of the rearmost opponent (Mb) in the longitudinal direction. a_{Mb} is the distance between the maximal pressure situation of the rearmost opponent (Mb) and the actual position of the rearmost opponent expressed by the difference between the distance in the longitudinal direction between the maximal pressure position of the rearmost opponent and the goal line (a_{Mbmax}) and the distance in the longitudinal direction between the actual position of the rearmost opponent (Mb) and the goal line (a_{Mbmå}). a_{Bmå} is the distance in the longitudinal direction between the game tool and the goal line.

It is decisive to the extent of a pressure exerted on the player (X₁) in possession of the game tool how much time he has to perform his action within a delimited area. Thus, the pressure is increased if area and time are reduced. Determining for the pressure on the player (X₁) in possession of the game tool is the time it takes an opponent to reduce the area that the player (X₁) in possession of the game tool has at his disposal for exercising his action. Decisive for this is the speed of the opponent in the direction of the player (X₁) and the distance of the opponent to the player (X₁) (a more precise index can be obtained by considering the speed and distance to the game tool). Since a optimal pressure begins when the game tool is transmitted in the direction of the player X₁ the contribution from the preceding pressure can be calculated by considering the time that lapses from the point in time when the ball is transmitted towards the player X₁ and until the player receives the ball. Determination of the average speed and average distance for each of the three opponents M1, M2 and M3 for the time during which the player is in possession of the game tool makes it possible to obtain two pressure indexes for each of the three opponents. This makes it possible to study how the composition within the pressure is built. The pressure in the transmission phase (the game tool is transmitted in the direction of the player) can be studied. This makes it possible to study the composition of the preceding pressure. Since the connection between the pressure intensity and such pressure index is negatively correlated, ie the more intensive the pressure, the lower the pressure index, this means that the pressure index must be corrected for an increment correction factor for the size of the sports field. Thus, a small-size sports field increases the pressure index more than a large-size sports field (It is easier to obtain a low pressure index on a small sports field).

The total pressure from the three opponents (M1, M2 and M3) most proximate the player X₁ plus the rearmost opponent (Mb) can also be studied. Since an intensive pressure game requires that the opponents (M1, M2 and M3) back each other up, this means that the most ideal location for each individual opponent will not be as close to the ball as possible, but rather displaced. It follows that it is necessary to determine ideal distances to the player (X₁) in possession of the game tool for each individual opponent in order to be able to determine whether the pressure is intensive. If an ideal distance is determined for the opponents (M1, M2, M3) relative to the player (X₁) in possession of the game tool, it will be possible to determine to which extent the pressure is intensive. The faster the individual opponents (M1, M2, M3) are located within the ideal distance to the player X₁ with the game tool, the more intensive is the pressure. It follows from this that an expression of the pressure intensity can be determined by considering the average distances between the actual locations of opponent M1, M2 and M3, respectively, and their respective ideal positions during the time, when the player (X₁) is in possession of the game tool. The larger the area available for a team to play on the smaller the pressure to which the team is exposed. The area available to a team to play on can be determined by looking at the location of the rearmost opponent (Mb). The closer the rearmost opponent (Mb) is located to the centre line, the smaller area is available for the team to play on, and the more pressure is exerted on the team featuring the player (X₁). Determination of the average distance between the actual position and the ideal position of the rearmost player yields an expression of the pressure from the rearmost opponent (Mb). The ideal distance for the rearmost opponent (Mb) will vary in accordance with the location of the game tool on the sports field. The closer the player (X₁) is to the back line, the smaller is the ideal distance between the player (X₁) and the rearmost opponent (Mb). Additionally, the players contribute differently to a pressure. The opponent that contributes the most to the pressure on the player (X₁) in possession of the game tool is the opponent (M1) located most proximate to the player X₁. Then second comes the opponent M2 who is located in the closest-but-one position relative to the player X₁, and thirdly in the closest-but-two position the opponent, M3. This fact necessitates a weighting of the significance of the player to the pressure (V₁, V₂, V₃ and V_{MB}). Since the connection between the pressure intensity and the pressure index is negatively correlated, an increment correction facture is used herein for the size of the sports field.

By study of the total pressure from the opponents, M1, M2, M3 and Mb, when the ideal distance is set to be equal to zero, it is obtained that the pressure from the opponents (M1, M2, M3) is calculated on the basis of the actual distance to the player X₁ or the game tool. By using a standardized expression of the pressure by the reciprocal value of the average distance for each of the three opponents, the weighting of the individual opponent is implicitly stated. If the pressure from the rearmost opponent (Mb) is measured by the reciprocal value of the average distance to the maximal pressure distance (can be calculated as the average across several different teams of the smallest distance to the goal line for the rearmost opponent in a game), the weighting of the rearmost opponent (Mb) is also given implicitly. Since the weighting is given implicitly, the constants V₁, V₂, V₃ and V_{b} will be equal to one. The advantage of a standardized approach is that the pressures from the individual opponents are expressed simultaneously with the weighting, the weighting taking its starting point in the distance to the player X₁ or the game tool. Since the connection between the pressure intensity and the pressure index is in this case positively correlated, ie the more intensive the pressure, the higher the pressure index, it means that the pressure index must be corrected for a decrement correction factor for the size of the sports field. Thus, a small-size sports field reduces the pressure index more than a large-size sports field (it is easier to obtain a higher pressure index on a small sports field).

The pressure index can also be determined by the average pressure from the three most proximate opponents (M1, M2 and M3) alone. This pressure index will tell how solid the pressure against the player is. The pressure index must in this case be corrected for an increment correction factor for the size of the sports field.

The above shows different kinds of pressure indexes in a simple situation. If the game tool is transmitted to a new player, new measurements can be carried out, depending on which pressure index it is desired to have determined. The measurements can be carried out continuously for a selected period of time, and in that manner it is possible to obtain different total pressure indexes. A total pressure index can either be in the form of a sum or an average of continuous measurements of a pressure index.

The continuous measurements could be used eg for studying a total pressure index in various phases as the game proceeds. Likewise, the continuous measurements could be used for studying a total pressure index for each time a player in possession of the game tool is present in a specific area of the sports field. A total pressure index for a specific opponent, a team or the game as a whole could also be studied over a selected period of time.

The position determination is enabled by use of stationary cameras. The camera is calibrated relative to reference points on the sports field (e.g. all lines, corner flags and goals), whereby distances on the recorded pictures can be determined. The recorded pictures are analysed in relation to reference pictures that are continuously updated to take into account changes in light due to changes in weather. By subtracting the pixel value of the actual picture from the pixel value for the reference picture, an absolute value is obtained. If the absolute value exceeds a given threshold, an object is detected on the actual picture. By means of probability calculations relative to the proportions of a human being or a game tool, it is deduced whether the detected object is a player or a game tool. By relating the player/the game tool to the reference points, an (x,y) position for player/game tool can be determined per analysed picture.

The position determination is enabled by means of special cameras that are equipped with sensors on a camera stand and lens. Before the game starts camera stand as well as lens are calibrated by zooming maximally in on various reference points on the sports field (e.g. corner flags, goal and centre of the sports field). By means of very accurate laser binoculars the distances to the various reference points are determined. Sensors in the camera then inform a powerful computer how the camera moves and which distance setting is used. Then the coordinates for various positions on the sports field can be calculated. It is not possible to track different individuals on the sports field automatically. This is done after the live recording by means of a "slow-machine" where the objects are marked manually on the screen. If for instance the speed of running of a player is to be calculated, the position of a player is marked on the screen in the starting and end phases, and the distance between the two positions and the time spent make it possible to calculate the speed of running. This, however, constitutes prior art, as it is known from airport and coastline surveillance to use radar systems with associated displays to track targets indicated on a video screen. The prior art will therefore enable establishment of the tracking of players, opponents and game tool.

A third option of automatically determining the position resides in equipping each player, each opponent and the game tool with a signal transmission unit. By locating a signal transmitter on a player, an opponent or the game tool, at least three signal receivers (S₁, S₂ and S₃) in various positions along the sports field will be capable of determining the position of each player, opponent or the game tool on the basis of a phase difference between the signals received. Now positional data can be transmitted to a computer that will subsequently automatically and continuously determine the position of any object on the sports field that is equipped with a signal transmitter. On the basis of the data received the computer will be capable of calculating pressure index for one or more selected players, running speeds for players and opponents, and various statistical data on selected players, selected opponents, the game tool and selected places in the sports field.

A fourth option of automatically determining the position resides in equipping each player, each opponent and the game tool with a signal transmitter that transmits a signal periodically. By locating at least three signal receivers (S₁, S₂ and S₃) in different positions along the sports field it is possible to determine the position of a player, an opponent or the game tool on the basis of differences in time of receipt of the signal. The data received can now automatically be transmitted to a computer for further calculating pressure indexes for one or more selected players, running speeds for players and opponents, and various statistical data on selected players, selected opponents, the game tool and selected points in the sports field. Optionally the signal transmitter on a player, an opponent or the game tool be configured as a transponder that transmits position data only in case a query is submitted in the form of a coded signal from one or more transmitters along the sports field.

A fifth option of automatically determining the position resides in equipping each player, each opponent and the game tool with a Global Positioning System (GPS) receiver and a signal transmitter. The number of signal receivers around the sports field can then optionally be reduced to one, the signal receiver being merely to function as a data link between the different signal transmitters and a computer. On the basis of the received data, the computer will be capable of calculating pressure index as described previously.

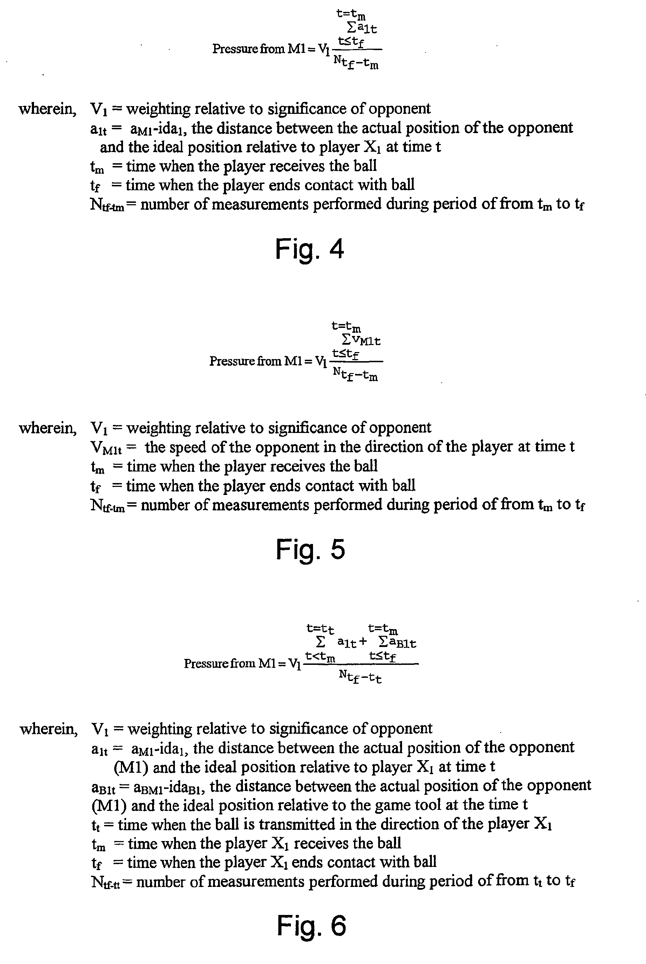

Figure 4 expresses that the pressure from an opponent (M1) is calculated as an average over time (t), weighted by a constant (V₁), of the difference (a₁ₜ) between the distance between the actual positions (a_{M1}) of the player (X₁) and the opponent (M1) and the distance between the ideal positions (ida₁) of the player (X₁) and the opponent (M1) during the time (tₘ, t_{f}) when the player (X₁) is in possession of the game tool, and where the constant (V₁) is an expression of the pressure significance of an opponent.

Figure 5 expresses that the pressure from an opponent (M1) is calculated as an average over time (t), weighted by a constant (V₁), of the speed (V_{M1t}) of the opponent (M1) during the time (tₘ, t_{f}) when the player (X₁) is in possession of the game tool and where the constant (V₁) is an expression of the pressure significance of an opponent.

Figure 6 expresses that the pressure from an opponent (M1) is calculated as an average over time (t), weighted by a constant (V₁), of the difference (a₁ₜ) between, the distance between the actual positions (a_{M1}) of the player (X₁) and the opponent (M1), and the distance between the ideal positions (ida₁) of the the player (X₁) and the opponent (M₁) during the time (tₜ, tₘ) during which the game tool is transmitted in the direction of the player (X₁) plus the difference (a_{B1t}) between the distance between the actual positions (a_{BM1}) of the game tool and the opponent (M1) and the distance between the ideal positions (ida_{B1}) of the game tool and the opponent (M1) during the time (tₘ, t_{f}) when the player (X₁) is in possession of the game tool and where the constant (V₁) is an expression of the pressure significance of an opponent.

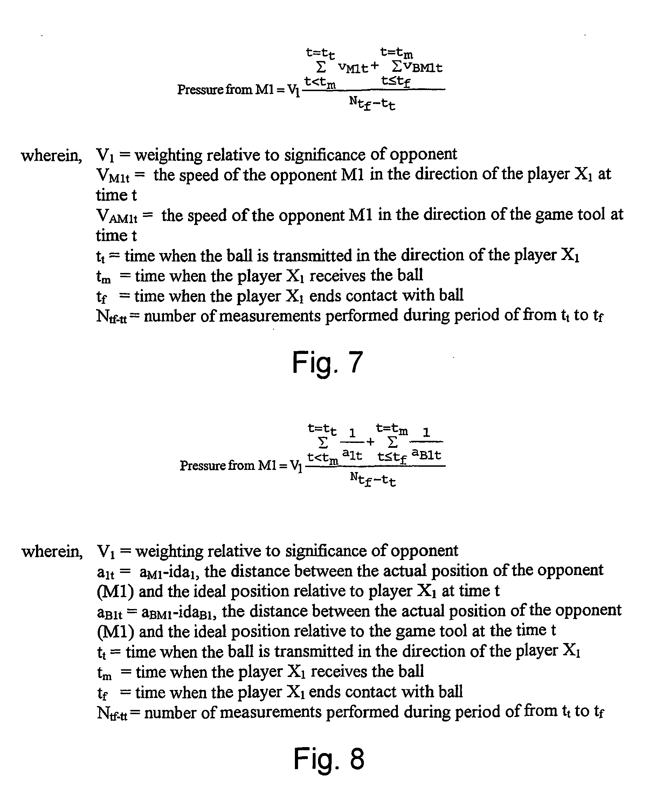

Figure 7 shows that the pressure from an opponent (M1) is calculated as an average over time (t), weighted by a constant (V₁), of the speed (v_{M1t}) of the opponent (M1) in the direction of the player (X₁) during the time (tₜ, tₘ) when the game tool is transmitted in the direction of the player (X₁) plus the speed (v_{BM1t}) of the opponent (M1) in the direction of the game tool during the time (tₘ, t_{f}) when the player (X₁) is in possession of the game tool, and where the constant (V₁) expresses the pressure significance of an opponent.

Figure 8 shows that the pressure from an opponent (M1) is calculated as an average over time (t), weighted by a constant (V₁), of the reciprocal value of the difference (a₁ₜ) between the distance between the actual positions (a_{M1}) of the player (X₁) and the opponent (M1) and the distance between the ideal positions (ida₁) of the player (X₁) and the opponent (M1) during the time (tₜ, tₘ) when the game tool is transmitted in the direction of the player (X₁) plus the reciprocal value of the difference (a_{B1t}) between the distance between the actual positions (a_{BM1}) of the game tool and the opponent (M1) and the distance between the ideal positions (ida_{B1}) of the game tool and the opponent (M1) during the time (tₘ,t_{f}) when the player (X₁) is in possession of the game tool, and where the constant (V₁) is an expression of the pressure significance of an opponent.

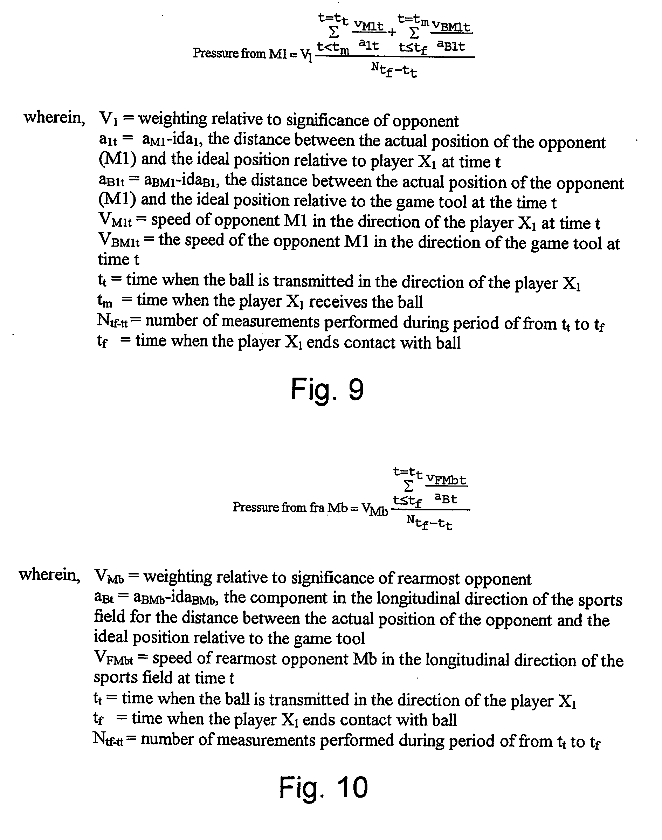

Figure 9 shows that the pressure from an opponent (M1) is calculated as an average over time (t), weighted by a constant (V₁), of the speed (V_{M1t}) of the opponent (M1) in the direction of the player (X₁) divided by the difference (a₁ₜ) between the distance between the actual positions (a_{M1}) of the player (X₁) and the opponent (M1), and the distance between the ideal positions (ida₁) of the player (X₁) and the opponent (M₁) during the time (tₜ, tₘ) during which the game tool is transmitted in the direction of the player (X₁) plus the speed (V_{BM1t}) of the opponent (M1) in the direction of the game tool divided by the difference (a_{B1t}) between the distance between the actual positions (a_{BM1}) of the game tool and the opponent (M1) and the distance between the ideal positions (ida_{B1}) of the game tool and the opponent (M1) during the time (tₘ, t_{f}) when the player (X₁) is in possession of the game tool and where the constant (V₁) is an expression of the pressure significance of an opponent.

Figure 10 shows that the pressure from the rearmost opponent (Mb) is calculated as an average over time (t), weighted by a constant (V_{Mb}), of the speed (V_{FMbt}) of the rearmost opponent (Mb) in the longitudinal direction of the sports field divided by the difference (a_{Bt}) between the distance between the actual positions (a_{BMb}) of the game tool and the rearmost opponent (Mb), and the distance between the ideal positions (ida_{BMb}) of the game tool and the rearmost opponent (M_{b}) during the time (tₜ, t_{f}) that lapses from the game tool is transmitted in the direction of the player (X₁) until the player (X₁) is no longer in possession of the game tool and where the constant (V_{MB}) is an expression of the pressure significance of a rearmost opponent.

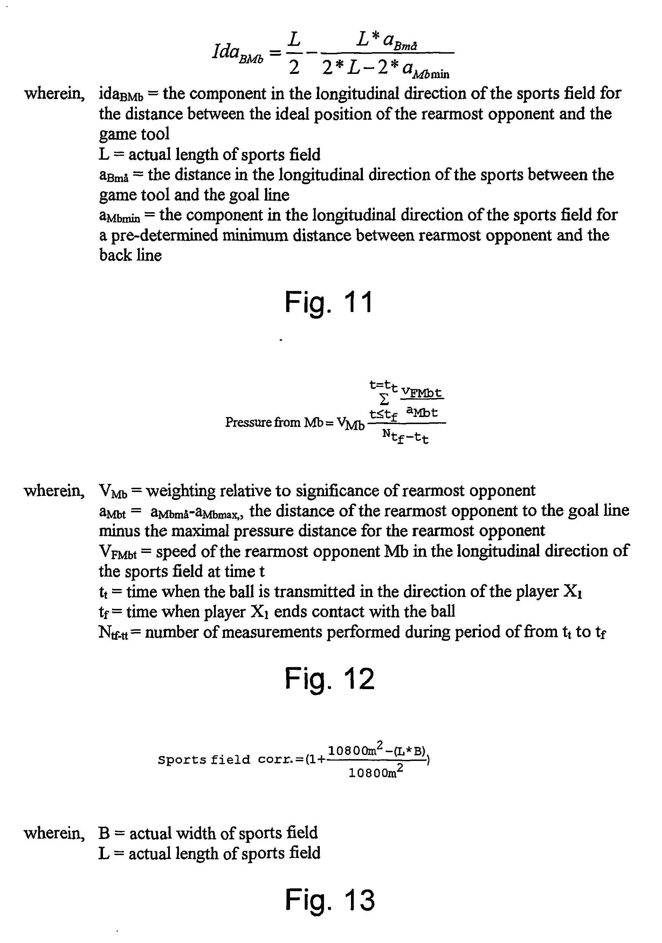

Figure 11 shows that the ideal distance (ida_{BMb}) for the rearmost opponent (Mb) relative to the location of the player (X₁) in the longitudinal direction is given by the difference between the actual length (L) of a sports field divided by two and a fraction having a numerator that is the actual length (L) of the sports field multiplied by the distance (a_{Bmå}) between the goal line and player (X₁), and the fraction has a denominator that is the difference between the actual length (L) of the sports field multiplied by two and the determined smallest distance (a_{Mbmin}) between the rear line and the rearmost opponent (Mb) multiplied by two.

Figure 12 shows that the pressure from the rearmost opponent (Mb) is calculated as an average over time (t), weighted by a constant (V_{Mb}), of the speed (V_{FMbt}) of the rearmost opponent (Mb) in the longitudinal direction of the sports field divided by the difference (a_{Mbt}) between the distance between the goal line and the actual position (a_{Mbmå}) of the rearmost opponent and the distance between the rearmost opponent (Mb) and the maximal pressure position (a_{Mbmax}) during the time (tₜ, t_{f}) that lapses when the game tool is transmitted in the direction of the player (X₁) until the player is no longer in possession of the game tool, and wherein the constant (V_{Mb}) is an expression of the pressure significance of a rearmost opponent.

Figure 13 shows a correction factor for the actual area of the sports field, where the correction factor constitutes the sum between 1 and a fraction with a nominator that is the maximal area of a sports field minus the product of the actual width (B) of a sports field and an actual length (L) of a sports field, and the fraction has a denominator that is the maximal area of the sports field, where the maximal area of the sports field is the maximal length of a sports field multiplied by the maximal width of a sports field.

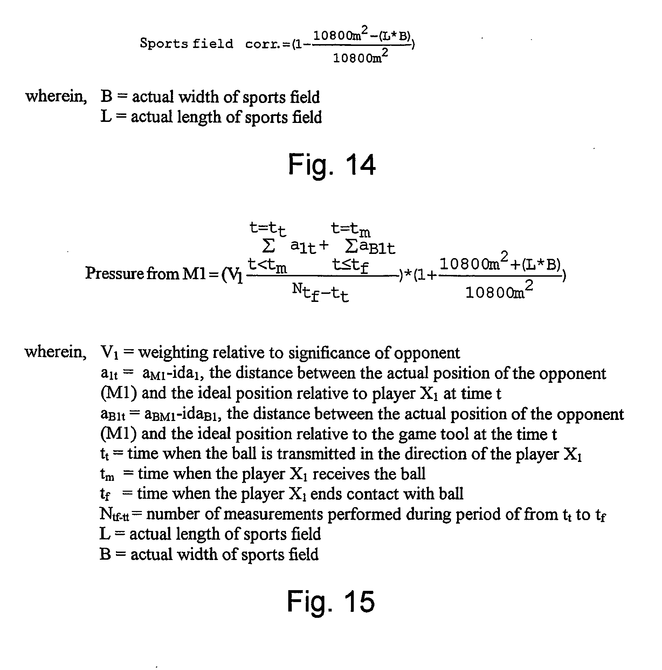

Figure 14 expresses a correction factor for the actual area of the sports field, where the correction factor constitutes the difference between 1 and a fraction with a nominator that is a maximal sports field area minus the product of an actual width (B) of a sports field and an actual length (L) of a sports field, and the fraction has a denominator that is the maximal area of the sports field where the maximal area of the sports field is the maximal length of a sports field multiplied by the maximal width of the sports field.

Figure 15 expresses a pressure index based on the distance alone as the pressure from an opponent, M1, multiplied by an increment correction factor for the actual area of the sports field.

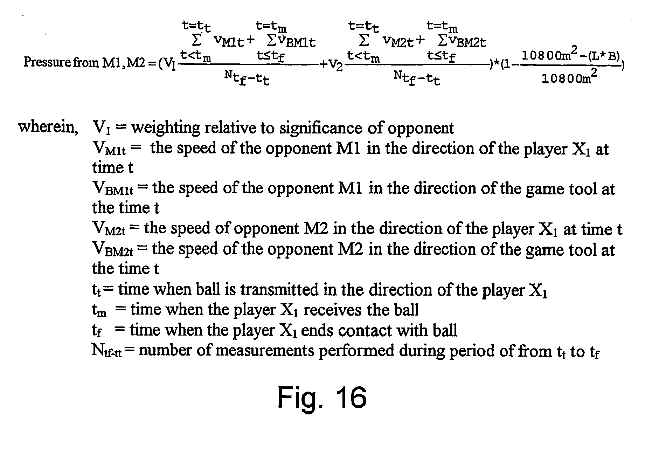

Figure 16 expresses a pressure index based on the speed alone as the sum of pressure from the two most proximate opponents (M1 and M2) multiplied by an increment correction factor for the actual area of the sports field.

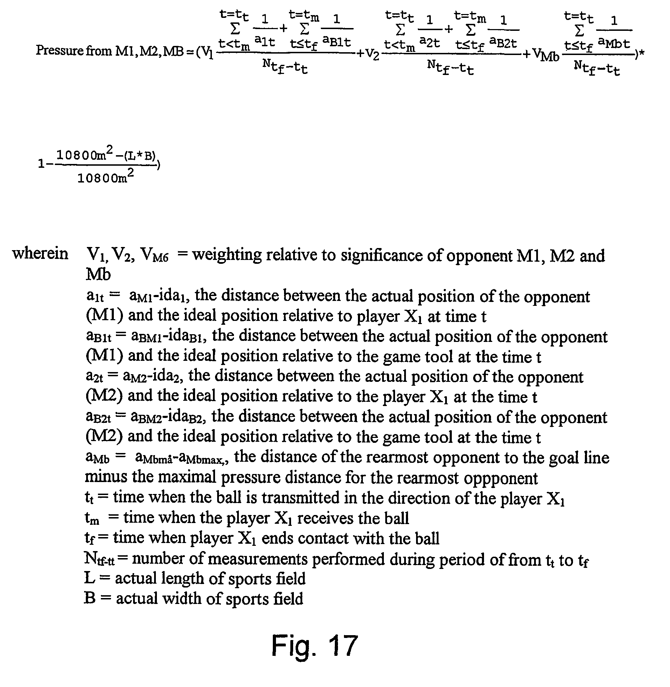

Figure 17 expresses a pressure index as the sum of a standardized expression of the pressure based on the distance from the two most proximate opponents (M1 and M2) and a rearmost opponent (Mb), and wherein the sum of pressure is multiplied by a decrement correction factor for the actual area of the sports field.

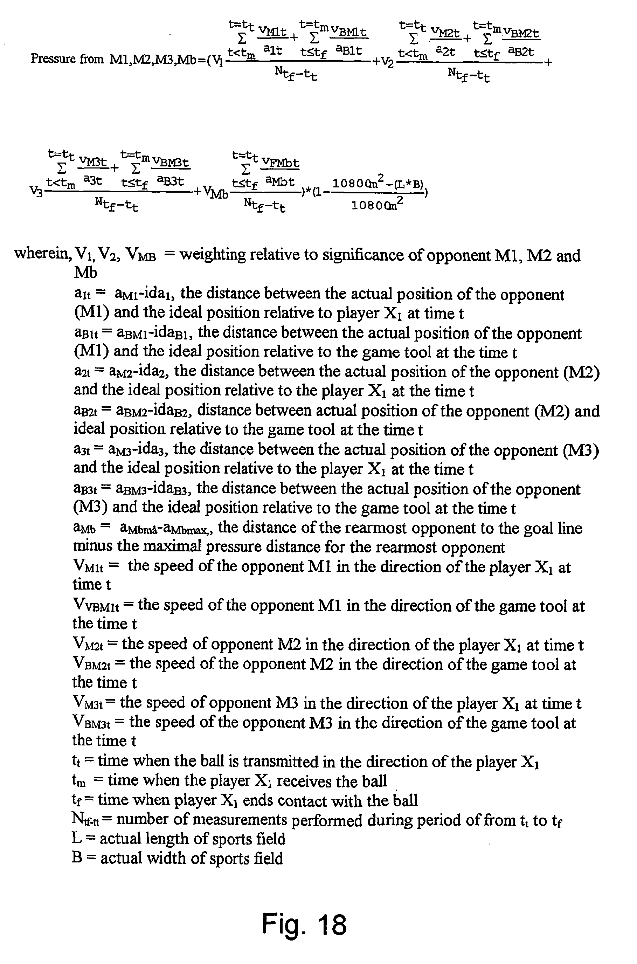

Figure 18 expressses a pressure index as the sum of the pressure based on the speed and distance from the three most proximate opponents (M1, M2, M3) and a rearmost opponent (Mb) multiplied by a decrement correction factor for the size of the sports field.

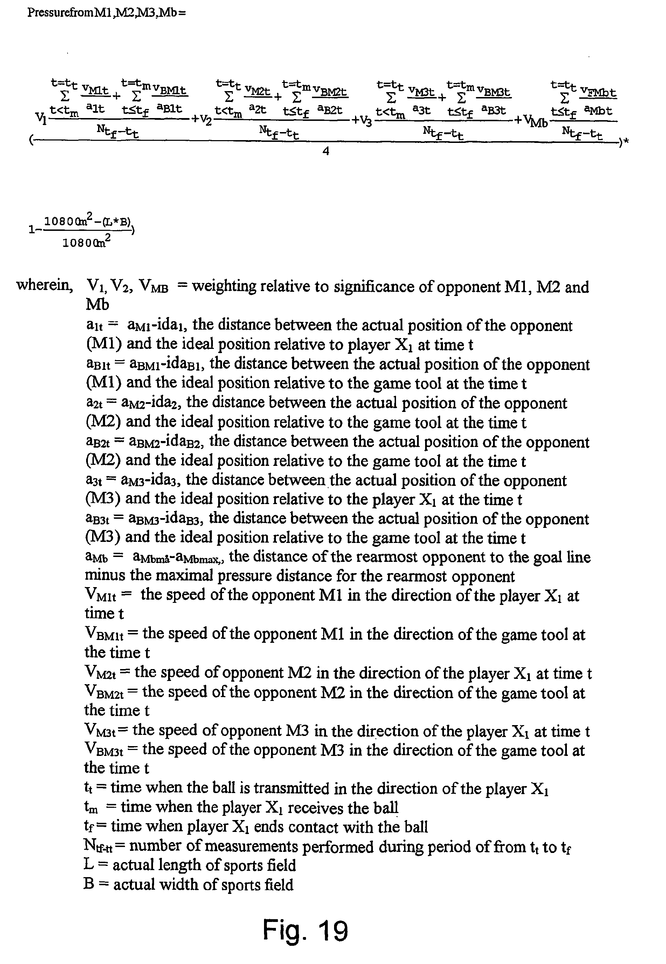

Figure 19 expresses a pressure index as the sum of the pressure from the three most proximate opponents (M1, M2 and M3) and the rearmost opponent (Mb) divided by 4 (the average) multiplied by a decrement correction factor for the size of the sports field.

If it is chosen eg to set the ideal positions at zero in the given expressions of pressure index, the expressions figure 4, 6, 8, 9, 10, 15, 17, 18 and 19 could be reduced. These reduced expressions will be attractive, eg when the calculation capacity is limited or where it is desired to merely have an estimate of the pressure index and in situations where there are several opponents included in the pressure index and it is simultaneously desired to avoid to have subjective weighting of the significance of the opponents to the pressure.

Other expressions of pressure index may also occur. The expressions of pressure index, Figures 4 through 19, may be expanded to also include the direction (angle) from which at least one opponent (M1) is coming (is positioned in) relative to the player (X₁). This may also form the basis of a directional weighting. For instance, the weighting of an opponent coming from behind will typically have value that is different from the situation where the same opponent came from in front.

The expressions of pressure index, Figures 4 through 19 may also be expanded to also include eg the direction (angle) at which at least one goal is situated relative to a player (X₁), and correspondingly relative to at least one opponent (M1). This may then form the basis of a further directional weighting relative to at least one goal. For instance, the weighting of a player (X₁) and correspondingly the weighting of an opponent (M1) that moves in the direction of the goal of the opponents will typically have a value that is different from the situation where the player (X₁), corresponding to the opponent (M1), was moving away from the goal of the opponent.

## Claims

1. A method of determining pressure on a player in control of a game tool in a game by using a computer, where said game takes place in a sports field provided with at least one goal, said game comprises one game tool and at least two teams, a first team consisting of at least one player (X₁) and an opponent team consisting of at least one opponent player (M1), wherein the method comprises the steps of:
- receiving information about the positions of said players and said game tool, said positions having been determined by positioning means,
- determining a pressure index being a value representing the pressure on said player in control of said game tool, said pressure index being determined based on said received information about the positions of said players and said game tool,
wherein said pressure index is determined as the sum of pressure on said player from at least one opponent player (M1), the pressure being based on at least one function of both distance between said one opponent player (M1) and the player (X₁) and the time that lapses from the player (X₁) receives the game tool until the player (X₁) is not longer in possession of the game tool.

2. A method according to claim 1, **characterised in that** the function of distance and time constitutes the speed of an opponent.

3. A method according to claim 1, **characterised in that** a function of distance and time constitutes the acceleration of an opponent.

4. A method according to at least one of claims 1 through 3, **characterised in that** when determining the pressure index at least the distance between an opponent and the game tool is included.

5. A method according to at least one of claims 1 through 4, **characterised in that** the time that lapses from the game tool is transmitted in the direction of the player (X₁) until the player (X₁) is in possession of the game tool is included when determining the pressure index.

6. A method according to at least one of claims 1, 4 and 5, **characterised in that** the pressure from an opponent is calculated by computer as an average of the difference between the actual distance of the opponent and the ideal distance of the opponent relative to the player (X₁) during the time that lapses from the game tool is transmitted in the direction of the player (X₁) until the player comes into possession of the game tool, plus the difference between the actual distance of the opponent and the ideal distance of the opponent relative to the game tool during the time that lapses from the player (X₁) comes into possession of the game tool until the player is no longer in possession of the game tool; and wherein the average is weighted by a constant, where the constant is an expression of the pressure significance of an opponent.

7. A method of determining pressure index in a game according to at least one of claims 1, 2, 4 and 5, **characterised in that** the pressure from an opponent further is based on an average of the speed of the opponent in the direction of the player (X₁) during the time that lapses from the game tool is transmitted in the direction of the player (X₁) until the player (X₁) comes into possession of the game tool, plus the speed of the opponent in the direction of the game tool during the time that lapses from the player (X₁) comes into possession of the game tool until the player is no longer in possession of the game tool; and wherein the average is weighted by a constant, where the constant is an expression of the pressure significance of an opponent.

8. A method according to at least one of claims 1, 4 and 5, **characterised in that** the pressure from an opponent further is based on an average of the reciprocal value of the difference between the actual distance of the opponent and the ideal distance of the opponent relative to the player (X₁) during the time that lapses from the game tool is transmitted in the direction of the player (X₁) until the player (X₁) comes into possession of the game tool, plus the reciprocal value of difference between the actual distance of the opponent and the ideal distance of the opponent relative to the game tool during the time that lapses from the player (X₁) comes into possession of the game tool until the player (X₁) is no longer in possession of the game tool; and wherein the average is weighted by a constant, where the constant is an expression of the pressure significance of an opponent.

9. A method according to at least one of claims 1, 2, 4 and 5, **characterised in that** the pressure from an opponent further is based on an average of the speed of the opponent in the direction of the player (X₁) divided by the difference between the actual distance of the opponent and the ideal distance of the opponent relative to the player (X₁) during the time that lapses from the game tool is transmitted in the direction of the player (X₁) until the player (X₁) comes into possession of the game tool, plus the speed of the opponent in the direction of the game tool divided by the difference between the actual distance of the opponent and the ideal distance of the opponent relative to the game tool during the time that lapses from the player (X₁) comes into possession of the game tool until the player (X₁) is no longer in possession of the game tool; and wherein the average is weighted by a constant, where the constant is an expression of the pressure significance of an opponent.

10. A method according to at least one of claims 1, 2, 4 and 5, **characterised in that** the pressure from a rearmost opponent (Mb), who is different from the goal keeper, is based on an average of the speed of the rearmost opponent (Mb) divided by the difference between the component for the actual distance of the rearmost opponent to the game tool in the longitudinal direction of the sports field and the component for the ideal distance of the rearmost opponent relative to the game tool in the longitudinal direction of the sports field during the time that lapses from the game tool is transmitted to the player (X₁) until the player (X₁) is no longer in possession of the game tool; and wherein the average is weighted by a constant, where the constant is an expression of the pressure significance of the rearmost opponent (Mb).

11. A method according to at least one of claims 1, 2, 4 and 5, **characterised in that** the pressure from a rearmost opponent, who is different from the goal keeper, is based on an average of the speed of the rearmost opponent (Mb) divided by the difference between the actual distance of the rearmost player (Mb) in the longitudinal direction of the sports field to the goal line and the maximal pressure distance of the rearmost opponent during the time that lapses from the game tool is transmitted to the player (X₁) until the player (X₁) is no longer in possession of the game tool; and wherein the average is weighted by a constant, where the constant is an expression of the pressure significance of the rearmost opponent (Mb).

12. A method according to at least one of claims 1-11, **characterised in that** the sum of pressure from at least one opponent (M1) and maximally an entire team of opponents (M1, M2, M3 ...) are corrected for the size of a sports field by means of a correction factor, where the correction factor constitutes the sum of one and a fraction having a numerator that is the maximal area of a sports field minus the product of the actual width (B) of a sports field and the actual length (L) of a sports field, and the fraction has a denominator that is the maximal area of the sports field, where the maximal area of the sports field is a maximal length of a sports field multiplied by a maximal width of a sports field.

13. A method according to at least one of claims 1-11, **characterised in that** the sum of pressure from at least one opponent (M1) and maximally an entire team of opponents (M1, M2, M3 ...) is corrected for the size of a sports field by means of a correction factor, where the correction factor constitutes the difference between 1 and a fraction having a numerator that is a maximal area of a sports field minus the product of an actual width (B) of a sports field and an actual length (L) of a sports field, and the fraction has a denominator that is the maximal area of the sports field, where the maximal area of the sports field is a maximal length of the sports field multiplied by a maximal width of a sports field.

14. A method according to at least one of claims 1-13, **characterised in that** the pressure index on a player (X₁) in possession of the game tool is determined as the average of the pressure from at least one of the opponents (M1) and maximally an entire team of opponents (M1, M2, M3 ...) multiplied by a correction factor for the size of the sports field.

15. A method according to at least one of claims 1-14, **characterised in that** a total pressure index is determined as an average of continuous measurements of a pressure index on any player (X₁) in possession of the game tool.

16. A method according to at least one of claims 1-15, **characterised in that** the collection of data for determining the position of the individual player and the position of the individual opponent and the position of game tools is determined by means of video monitoring equipment.

17. A method according to at least one of claims 1-15, **characterised in that** the collection of data for determining the position of the individual player and the position of the individual opponent and the position of game tools is determined by means of transmitters mounted on the individual player and transmitters mounted on the individual opponent and transmitters mounted on the game tools and at least one signal receiver located along the sports field.

18. An apparatus for determining pressure on a player in control of a game tool in a game, where said game takes place in a sports field provided with at least one goal, said game comprises one game tool and at least two teams, a first team consisting of at least one player (X₁) and an opponent team consisting of at least one opponent player (M1), wherein the apparatus comprises:
- receiving means for receiving information about the positions of said players and said game tool, said positions having been determined by positioning means,
- processing means for determining a pressure index being a value representing the pressure on said player in control of said game tool, said pressure index being determined based on said received information about the positions of said players and said game tool,
wherein said pressure index is determined as the sum of pressure on said player from at least one opponent player (M1), the pressure being based on at least one function of both distance between said one opponent player (M1) and the player (X₁) and the time that lapses from the player (X₁) receives the game tool until the player (X₁) is not longer in possession of the game tool.

## Patentansprüche

1. Verfahren zur Bestimmung von Druck auf einen Spieler in Kontrolle eines Spielgeräts in einem Spiel durch Verwenden eines Computers, wobei besagtes Spiel auf einem Sportplatz stattfindet, der mit wenigstens einem Tor ausgestattet ist, das Spiel ein Spielgerät und mindestens zwei Mannschaften umfasst, eine erste Mannschaft, die aus wenigstens einem Spieler (X₁) besteht, und eine gegnerische Mannschaft, die aus mindestens einem gegnerischen Spieler (M1) besteht, wobei das Verfahren die folgenden Schritte beinhaltet:
- Empfangen von Informationen über die Positionen der Spieler und des Spielgeräts,
wobei die Positionen durch Positionsmittel bestimmt wurden,
- Bestimmen eines Druckindexes, der ein Wert ist, der den Druck auf den Spieler in Kontrolle des Spielgeräts darstellt, wobei der Druckindex basierend auf den empfangenen Informationen über die Positionen der Spieler und des Spielgeräts bestimmt wird,
wobei der Druckindex bestimmt wird als die Summe des Drucks auf den Spieler von mindestens einem gegnerischen Spieler (M1), wobei der Druck basiert auf wenigstens einer Funktion sowohl der Entfernung zwischen dem einen gegnerischen Spieler (M1) und dem Spieler (X₁) als auch der Zeit, die verstreicht von der Annahme des Spielgeräts durch den Spieler (X₁), bis der Spieler (X₁) nicht länger in Besitz des Spielgeräts ist.

2. Verfahren nach Anspruch 1, **dadurch gekennzeichnet, dass** die Funktion von Entfernung und Zeit die Geschwindigkeit eines Gegners darstellt.

3. Verfahren nach Anspruch 1, **dadurch gekennzeichnet, dass** eine Funktion von Entfernung und Zeit die Beschleunigung eines Gegners darstellt.

4. Verfahren nach mindestens einem der Ansprüche 1 bis 3, **dadurch gekennzeichnet, dass** bei Bestimmen des Druckindexes zumindest die Entfernung zwischen einem Gegner und dem Spielgerät einbezogen wird.

5. Verfahren nach mindestens einem der Ansprüche 1 bis 4, **dadurch gekennzeichnet, dass** die Zeit, die verstreicht von der Abgabe des Spielgeräts in Richtung des Spielers (X₁), bis der Spieler (X₁) in Besitz des Spielgeräts ist, bei Bestimmen des Druckindexes einbezogen wird.

6. Verfahren nach mindestens einem der Ansprüche 1, 4 und 5, **dadurch gekennzeichnet, dass** der Druck von einem Gegner mittels Computer berechnet wird als Durchschnitt der Differenz zwischen der tatsächlichen Entfernung des Gegners und der idealen Entfernung des Gegners in Bezug auf den Spieler (X₁) während der Zeit, die verstreicht von der Abgabe des Spielgeräts in Richtung des Spielers (X₁), bis der Spieler in Besitz des Spielgeräts gelangt, zuzüglich der Differenz zwischen der tatsächlichen Entfernung des Gegners und der idealen Entfernung des Gegners in Bezug auf das Spielgerät während der Zeit, die verstreicht von der Inbesitznahme des Spielgeräts durch den Spieler (X₁), bis der Spieler nicht länger in Besitz des Spielgeräts ist; und wobei der Durchschnitt mittels einer Konstante gewichtet wird, wobei die Konstante ein Ausdruck der Drucksignifikanz eines Gegners ist.

7. Verfahren zur Bestimmung eines Druckindexes in einem Spiel nach mindestens einem der Ansprüche 1, 2, 4 und 5, **dadurch gekennzeichnet, dass** der Druck von einem Gegner weiterhin basiert auf einem Durchschnitt der Geschwindigkeit des Gegners in Richtung des Spielers (X₁) während der Zeit, die verstreicht von der Abgabe des Spielgeräts in Richtung des Spielers (X₁), bis der Spieler (X₁) in Besitz des Spielgeräts gelangt, zuzüglich der Geschwindigkeit des Gegners in Richtung des Spielgeräts während der Zeit, die verstreicht von der Inbesitznahme des Spielgeräts durch den Spieler (X₁), bis der Spieler nicht länger in Besitz des Spielgeräts ist; und wobei der Durchschnitt durch eine Konstante gewichtet wird, wobei die Konstante ein Ausdruck der Drucksignifikanz eines Gegners ist.

8. Verfahren nach mindestens einem der Ansprüche 1, 4 und 5, **dadurch gekennzeichnet, dass** der Druck von einem Gegner weiterhin basiert auf einem Durchschnitt des Kehrwerts der Differenz zwischen der tatsächlichen Entfernung des Gegners und der idealen Entfernung des Gegners in Bezug auf den Spieler (X₁) während der Zeit, die verstreicht von der Abgabe des Spielgeräts in Richtung des Spielers (X₁), bis der Spieler (X₁) in den Besitz des Spielgeräts gelangt, zuzüglich des Kehrwerts der Differenz zwischen der tatsächlichen Entfernung des Gegners und der idealen Entfernung des Gegners in Bezug auf das Spielgerät während der Zeit, die verstreicht von der Inbesitznahme des Spielgeräts durch den Spieler (X₁), bis der Spieler (X₁) nicht länger in Besitz des Spielgeräts ist; und wobei der Durchschnitt durch eine Konstante gewichtet wird, wobei die Konstante ein Ausdruck der Drucksignifikanz eines Gegners sind.

9. Verfahren nach mindestens einem der Ansprüche 1, 2, 4 und 5, **dadurch gekennzeichnet, dass** der Druck von einem Gegner weiterhin basiert auf einem Durchschnitt der Geschwindigkeit des Gegners in Richtung des Spielers (X₁) geteilt durch die Differenz zwischen der tatsächlichen Entfernung des Gegners und der idealen Entfernung des Gegners in Bezug auf den Spieler (X₁) während der Zeit, die verstreicht von der Abgabe des Spielgeräts in Richtung des Spielers (X₁), bis der Spieler (X₁) in Besitz des Spielgeräts gelangt, zuzüglich der Geschwindigkeit des Gegners in Richtung des Spielgeräts geteilt durch die Differenz zwischen der tatsächlichen Entfernung des Gegners und der idealen Entfernung des Gegners in Bezug auf das Spielgerät während der Zeit, die verstreicht von der Inbesitznahme des Spielgeräts durch den Spieler (X₁), bis der Spieler (X₁) nicht länger in Besitz des Spielgeräts ist; und wobei der Durchschnitt durch eine Konstante gewichtet wird, wobei die Konstante ein Ausdruck der Drucksignifikanz eines Gegners ist.

10. Verfahren nach mindestens einem der Ansprüche 1, 2, 4 und 5, **dadurch gekennzeichnet, dass** der Druck von einem hintersten Gegner (Mb), welcher nicht der Torwart ist, basiert auf einem Durchschnitt der Geschwindigkeit des hintersten Gegners (Mb) geteilt durch die Differenz zwischen der Komponente für die tatsächliche Entfernung des hintersten Gegners zu dem Spielgerät in Längsrichtung des Sportplatzes und der Komponente für die ideale Entfernung des hintersten Gegners in Bezug auf das Spielgerät in Längsrichtung des Sportplatzes während der Zeit, die verstreicht von der Abgabe des Spielgeräts an den Spieler (X₁), bis der Spieler (X₁) nicht länger in Besitz des Spielgeräts ist; und wobei der Durchschnitt gewichtet wird durch eine Konstante, wobei die Konstante ein Ausdruck der Drucksignifikanz des hintersten Gegners (Mb) ist.

11. Verfahren nach mindestens einem der Ansprüche 1, 2, 4 und 5, **dadurch gekennzeichnet, dass** der Druck von einem hintersten Gegner, der nicht der Torhüter ist, basiert auf einem Durchschnitt der Geschwindigkeit des hintersten Gegners (Mb) geteilt durch die Differenz zwischen der tatsächlichen Entfernung des hintersten Spielers (Mb) in Längsrichtung des Sportplatzes zu der Torlinie und der maximalen Druckentfernung des hintersten Gegners während der Zeit, die verstreicht von der Abgabe des Spielgeräts an den Spieler (X₁), bis der Spieler (X₁) nicht länger in Besitz des Spielgeräts ist; und wobei der Durchschnitt durch eine Konstante gewichtet wird, wobei die Konstante ein Ausdruck der Drucksignifikanz des hintersten Gegners (Mb) ist.

12. Verfahren nach mindestens einem der Ansprüche 1-11, **dadurch gekennzeichnet, dass** die Summe des Drucks von mindestens einem Gegner (M1) und höchstens einer ganzen Mannschaft von Gegnern (M1, M2, M3 ...) für die Größe eines Sportplatzes mittels eines Korrekturfaktors korrigiert wird, wobei der Korrekturfaktor die Summe aus 1 und einem Bruch darstellt, der einen Zähler hat, welcher der maximale Bereich eines Sportplatzes weniger des Produkts aus der tatsächlichen Breite (B) eines Sportplatzes und der tatsächlichen Länge (L) eines Sportplatzes ist, und der Bruch einen Nenner hat, welcher der maximale Bereich des Sportplatzes ist, wobei der maximale Bereich des Sportplatzes eine maximale Länge eines Sportplatzes multipliziert mit einer maximalen Breite eines Sportplatzes ist.

13. Verfahren nach mindestens einem der Ansprüche 1-11, **dadurch gekennzeichnet, dass** die Summe des Drucks von mindestens einem Gegner (M1) und höchstens einer ganzen Mannschaft von Gegnern (M1, M2, M3 ...) für die Größe eines Sportplatzes mittels eines Korrekturfaktors korrigiert wird, wobei der Korrekturfaktor die Differenz zwischen 1 und einem Bruch darstellt, der einen Zähler hat, der ein maximaler Bereich eines Sportplatzes weniger des Produkts aus einer tatsächlichen Breite (B) eines Sportplatzes und einer tatsächlichen Länge (L) eines Sportplatzes ist, und der Bruch einen Nenner hat, welcher der maximale Bereich des Sportplatzes ist, wobei der maximale Bereich des Sportplatzes eine maximale Länge des Sportplatzes multipliziert mit einer maximalen Breite eines Sportplatzes ist.

14. Verfahren nach mindestens einem der Ansprüche 1-13, **dadurch gekennzeichnet, dass** der Index des Drucks auf einen Spieler (X₁) in Besitz des Spielgeräts bestimmt wird als der Durchschnitt des Drucks von mindestens einem der Gegner (M1) und höchstens einer ganzen Mannschaft von Gegnern (M1, M2, M3 ...) multipliziert mit einem Korrekturfaktor für die Größe des Sportplatzes.

15. Verfahren nach mindestens einem der Ansprüche 1-14, **dadurch gekennzeichnet, dass** ein Gesamtdruckindex bestimmt wird als Durchschnitt kontinuierlicher Messungen eines Indexes eines Drucks auf einen beliebigen Spieler (X₁) in Besitz des Spielgeräts.

16. Verfahren nach mindestens einem der Ansprüche 1-15, **dadurch gekennzeichnet, dass** die Sammlung von Daten zur Bestimmung der Position des individuellen Spielers und der Position des individuellen Gegners und der Position von Spielgeräten bestimmt wird mittels Videoüberwachungsgerät.

17. Verfahren nach mindestens einem der Ansprüche 1-15, **dadurch gekennzeichnet, dass** die Sammlung von Daten zur Bestimmung der Position des individuellen Spielers und der Position des individuellen Gegners und der Position von Spielgeräten bestimmt wird durch Transmitter, die auf dem individuellen Spieler angebracht sind, und Transmitter, die auf dem individuellen Gegner angebracht sind, und Transmitter, die auf den Spielgeräten angebracht sind, und mindestens einen Signalempfänger, der entlang dem Sportplatz angeordnet ist.

18. Vorrichtung zur Bestimmung von Druck auf einen Spieler in Kontrolle eines Spielgeräts in einem Spiel, wobei besagtes Spiel auf einem Sportplatz stattfindet, der mit mindestens einem Tor ausgestattet ist, wobei das Spiel ein Spielgerät und mindestens zwei Mannschaften umfasst, eine erste Mannschaft, die aus mindestens einem Spieler (X₁) besteht, und eine gegnerische Mannschaft, die aus mindestens einem gegnerischen Spieler (M1) besteht, wobei die Vorrichtung Folgendes umfasst:
- Empfangsmittel zum Empfang von Informationen über die Positionen der Spieler und des Spielgeräts, wobei die Positionen durch Positionsmittel bestimmt wurden,
- Verarbeitungsmittel zur Bestimmung eines Druckindexes, der ein Wert ist, der den
Druck auf den Spieler in Kontrolle des Spielgeräts darstellt, wobei der Druckindex basierend auf den empfangenen Informationen über die Positionen der Spieler und des Spielgeräts bestimmt wird,
wobei der Druckindex bestimmt wird als die Summe eines Drucks auf den Spieler von mindestens einem gegnerischen Spieler (M1), wobei der Druck basiert auf mindestens einer Funktion sowohl der Entfernung zwischen dem einen gegnerischen Spieler (M1) und dem Spieler (X₁) als auch der Zeit, die verstreicht von der Annahme des Spielgeräts durch den Spieler (X₁), bis der Spieler (X₁) nicht länger in Besitz des Spielgeräts ist.

## Revendications

1. Procédé pour déterminer la pression sur un joueur dans la commande d'un outil de jeu dans un jeu en utilisant un ordinateur, où ledit jeu a lieu sur un terrain de sport équipé d'au moins un but, ledit jeu comprend un outil de jeu et au moins deux équipes, une première équipe composée d'au moins un joueur (X₁) et une équipe adverse composée d'au moins un joueur adverse (M1), dans lequel le procédé comprend les étapes de :
- recevoir des informations concernant les positions desdits joueurs et dudit outil de jeu, lesdites positions ayant été déterminées par des moyens de positionnement,
- déterminer un indice de pression ayant une valeur représentant la pression sur ledit joueur dans la commande dudit outil de jeu, ledit indice de pression étant déterminé en se basant sur lesdites informations reçues concernant les positions desdits joueurs et dudit outil de jeu,
dans lequel ledit indice de pression est déterminé comme la somme de pression sur ledit joueur provenant d'au moins un joueur adverse (M1), la pression étant basée sur au moins une fonction à la fois de la distance entre ledit joueur adverse (M1) et le joueur (X₁) et du temps qui s'écoule quand le joueur (X₁) reçoit l'outil de jeu jusqu'à ce que le joueur (X₁) ne soit plus en possession de l'outil de jeu.

2. Procédé selon la revendication 1,
**caractérisé en ce que** la fonction de distance et de temps constitue la vitesse d'un adversaire.

3. Procédé selon la revendication 1,
**caractérisé en ce qu'**une fonction de distance et de temps constitue l'accélération d'un adversaire.

4. Procédé selon au moins une des revendications 1 à 3,
**caractérisé en ce que**, quand on détermine l'indice de pression, au moins la distance entre un adversaire et l'outil de jeu est comprise.

5. Procédé selon au moins une des revendications 1 à 4,
**caractérisé en ce que** le temps qui s'écoule quand l'outil de jeu est transmis dans la direction du joueur (X₁) jusqu'à ce que le joueur (X₁) soit en possession de l'outil de jeu, est compris quand on détermine l'indice de pression.

6. Procédé selon au moins une des revendications 1, 4 et 5,
**caractérisé en ce que** la pression provenant d'un adversaire est calculée par ordinateur comme une moyenne de la différence entre la distance réelle de l'adversaire et la distance idéale de l'adversaire par rapport au joueur (X₁) durant le temps qui s'écoule quand l'outil de jeu est transmis dans la direction du joueur (X₁) jusqu'à ce que le joueur entre en possession de l'outil de jeu, plus la différence entre la distance réelle de l'adversaire et la distance idéale de l'adversaire par rapport à l'outil de jeu durant le temps qui s'écoule quand le joueur (X₁) entre en possession de l'outil de jeu jusqu'à ce que le joueur ne soit plus en possession de l'outil de jeu ; et dans lequel la moyenne est pondérée par une constante, la constante étant une expression de l'importance de la pression d'un adversaire.

7. Procédé pour déterminer l'indice de pression dans un jeu selon au moins une des revendications 1, 2, 4 et 5,
**caractérisé en ce que** la pression provenant d'un adversaire est de plus basée sur une moyenne de la vitesse de l'adversaire dans la direction du joueur (X₁) durant le temps qui s'écoule quand l'outil de jeu est transmis dans la direction du joueur (X₁) jusqu'à ce que le joueur (X₁) entre en possession de l'outil de jeu, plus la vitesse de l'adversaire dans la direction de l'outil de jeu durant le temps qui s'écoule quand le joueur (X₁) entre en possession de l'outil de jeu jusqu'à ce que le joueur ne soit plus en possession de l'outil de jeu ; et dans lequel la moyenne est pondérée par une constante, la constante étant une expression de l'importance de la pression d'un adversaire.

8. Procédé selon au moins une des revendications 1, 4 et 5,
**caractérisé en ce que** la pression provenant d'un adversaire est de plus basée sur une moyenne de la valeur réciproque de la différence entre la distance réelle de l'adversaire et la distance idéale de l'adversaire par rapport au joueur (X₁) durant le temps qui s'écoule quand l'outil de jeu est transmis dans la direction du joueur (X₁) jusqu'à ce que le joueur (X₁) entre en possession de l'outil de jeu, plus la valeur réciproque de la différence entre la distance réelle de l'adversaire et la distance idéale de l'adversaire par rapport à l'outil de jeu durant le temps qui s'écoule quand le joueur (X₁) entre en possession de l'outil de jeu jusqu'à ce que le joueur (X₁) ne soit plus en possession de l'outil de jeu ; et dans lequel la moyenne est pondérée par une constante, la constante étant une expression de l'importance de la pression d'un adversaire.

9. Procédé selon au moins une des revendications 1, 2, 4 et 5,
**caractérisé en ce que** la pression provenant d'un adversaire est de plus basée sur une moyenne de la vitesse de l'adversaire dans la direction du joueur (X₁) divisée par la différence entre la distance réelle de l'adversaire et la distance idéale de l'adversaire par rapport au joueur (X₁) durant le temps qui s'écoule quand l'outil de jeu est transmis dans la direction du joueur (X₁) jusqu'à ce que le joueur (X₁) entre en possession de l'outil de jeu, plus la vitesse de l'adversaire dans la direction de l'outil de jeu divisée par la différence entre la distance réelle de l'adversaire et la distance idéale de l'adversaire par rapport à l'outil de jeu durant le temps qui s'écoule quand le joueur (X₁) entre en possession de l'outil de jeu jusqu'à ce que le joueur (X₁) ne soit plus en possession de l'outil de jeu ; et dans lequel la moyenne est pondérée par une constante, la constante étant une expression de l'importance de la pression d'un adversaire.

10. Procédé selon au moins une des revendications 1, 2, 4 et 5,
**caractérisé en ce que** la pression provenant d'un dernier adversaire (Mb), qui est différent du gardien de but, est basée sur une moyenne de la vitesse du dernier adversaire (Mb) divisée par la différence entre la composante de la distance réelle du dernier adversaire par rapport à l'outil de jeu dans la direction longitudinale du terrain de sport et la composante de la distance idéale du dernier adversaire par rapport à l'outil de jeu dans la direction longitudinale du terrain de sport durant le temps qui s'écoule quand l'outil de jeu est transmis au joueur (X₁) jusqu'à ce que le joueur (X₁) ne soit plus en possession de l'outil de jeu ; et dans lequel la moyenne est pondérée par une constante, la constante étant une expression de l'importance de la pression du joueur arrière (Mb).

11. Procédé selon au moins une des revendications 1, 2, 4 et 5,
**caractérisé en ce que** la pression provenant d'un dernier adversaire, qui est différent du gardien de but, est basée sur une moyenne de la vitesse du dernier adversaire (Mb) divisée par la différence entre la distance réelle du dernier joueur (Mb) dans la direction longitudinale du terrain de sport par rapport à la ligne de but et la distance de la pression maximale du dernier adversaire durant le temps qui s'écoule quand l'outil de jeu est transmis au joueur (X₁) jusqu'à ce que le joueur (X₁) ne soit plus en possession de l'outil de jeu ; et dans lequel la moyenne est pondérée par une constante, la constante étant une expression de l'importance de la pression du dernier adversaire (Mb).

12. Procédé selon au moins une des revendications 1-11,
**caractérisé en ce que** la somme de pression provenant d'au moins un adversaire (M1) et au maximum d'une équipe complète d'adversaires (M1, M2, M3 ...) est corrigée pour la dimension d'un terrain de sport par l'intermédiaire d'un facteur de correction, le facteur de correction constituant la somme de un et d'une fraction ayant un numérateur qui est l'aire maximale du terrain de sport moins le produit de la largeur réelle (B) du terrain de sport et de la longueur réelle (L) du terrain de sport, et la fraction a un dénominateur qui est l'aire maximale du terrain de sport, l'aire maximale du terrain de sport étant une longueur maximale d'un terrain de sport multipliée par une largeur maximale d'un terrain de sport.

13. Procédé selon au moins une des revendications 1-11,
**caractérisé en ce que** la somme de pression provenant d'au moins un adversaire (M1) et au maximum d'une équipe complète d'adversaires (M1, M2, M3 ...) est corrigée pour la dimension d'un terrain de sport par l'intermédiaire d'un facteur de correction, le facteur de correction constituant la différence entre 1 et une fraction ayant un numérateur qui est une aire maximale d'un terrain de sport moins le produit d'une largeur réelle (B) du terrain de sport et d'une longueur réelle (L) du terrain de sport, et la fraction a un dénominateur qui est l'aire maximale du terrain de sport, l'aire maximale du terrain de sport étant une longueur maximale du terrain de sport multipliée par une largeur maximale du terrain de sport.

14. Procédé selon au moins une des revendications 1-13,
**caractérisé en ce que** l'indice de pression sur un joueur (X₁) en possession de l'outil de jeu est déterminé comme la moyenne de la pression d'au moins l'un des adversaires (M1) et au maximum d'une équipe complète d'adversaires (M1, M2, M3 ...) multipliée par un facteur de correction de la dimension du terrain de sport.

15. Procédé selon au moins une des revendications 1-14,
**caractérisé en ce qu'**un indice de pression totale est déterminé comme une moyenne de mesures continues d'un indice de pression sur un quelconque joueur ((X₁) en possession de l'outil de jeu.

16. Procédé selon au moins une des revendications 1-15,
**caractérisé en ce que** la collecte de données pour déterminer la position du joueur particulier et la position de l'adversaire particulier et la position des outils de jeu est déterminée par l'intermédiaire d'un équipement de contrôle vidéo.

17. Procédé selon au moins une des revendications 1-15,
**caractérisé en ce que** la collecte de données pour déterminer la position du joueur particulier et la position de l'adversaire particulier et la position des outils de jeu est déterminée par l'intermédiaire d'émetteurs montés sur le joueur particulier et d'émetteurs montés sur l'adversaire particulier et d'émetteurs montés sur les outils de jeu et au moins un récepteur de signaux situé le long du terrain de sport.

18. Appareil pour déterminer la pression sur un joueur dans la commande d'un outil de jeu dans un jeu, dans lequel ledit jeu a lieu dans un terrain de sport équipé d'au moins un but, ledit jeu comprend un outil de jeu et au moins deux équipes, une première équipe composée d'au moins un joueur (X₁) et une équipe adverse composée d'au moins un joueur adverse (M1), dans lequel l'appareil comprend :
- des moyens de réception pour recevoir des informations concernant les positions desdits joueurs et dudit outil de jeu, lesdites positions ayant été déterminées par des moyens de positionnement ;
- des moyens de traitement pour déterminer un indice de pression qui est une valeur représentant la pression sur ledit joueur dans la commande dudit outil de jeu, ledit indice de pression étant déterminé en se basant sur lesdites informations reçues concernant les positions desdits joueurs et dudit outil de jeu,
dans lequel ledit indice de pression est déterminé comme la somme de pression sur ledit joueur provenant d'au moins un joueur adverse (M1), la pression étant basée sur au moins une fonction à la fois de la distance entre ledit joueur adverse (M1) et le joueur (X₁) et le temps qui s'écoule quand le joueur (X₁) reçoit l'outil de jeu jusqu'à ce que le joueur (X₁) ne soit plus en possession de l'outil de jeu.
